Europäisches Patentamt

(19) European Patent Office

Office européen des brevets

(11) Publication number: **0 279 850 B1**

# EUROPEAN PATENT SPECIFICATION

(12)

(12)

(45) Date of publication of patent specification:
03.07.91 Bulletin 91/27

(21) Application number: 87906090.3

(22) Date of filing: 07.09.87

(86) International application number:
PCT/FI87/00121

(87) International publication number:
WO 88/01566 10.03.88 Gazette 88/06

(51) Int. Cl.⁵: **B31F 1/20**

(54) CORRUGATED BOARD COATING METHOD AND APPARATUS.

(30) Priority: 05.09.86 FI 863585

(43) Date of publication of application:
31.08.88 Bulletin 88/35

(45) Publication of the grant of the patent:
03.07.91 Bulletin 91/27

(84) Designated Contracting States:
CH DE FR GB LI NL SE

(56) References cited:
EP-A- 0 092 079
EP-A- 0 151 088
CH-A- 494 113
US-A- 3 307 994

(73) Proprietor: KASTEKNO OY
Yrittäjäntie 9
SF-03600 Karkkila (FI)

(72) Inventor: SILVESALO, Juha
Lemmointie 16/18 A
SF-03600 Karkkila (FI)

(74) Representative: Brycman, Jean et al
CABINET ORES 6, Avenue de Messine
F-75008 Paris (FR)

## Description

The present invention relates to a corrugated board coating method in accordance with the preamble of claim 1.

Further, the invention concerns an apparatus for the implementation of the coating method, in accordance with the preamble of claim 4.

Corrugated board coating methods of the prior art are implemented primarily in two ways : either by using a separate coating process for coating the linerboard used in production or by coating the factory-ready corrugated board box blanks through spraying of coating mix onto the surface of the linerboard.

Precoating of linerboard used in corrugated board manufacture is implemented as a separate process, and the coating materials common in use are such as to cause considerable difficulties and slowing in the manufacture of corrugated board. Furthermore, a waxing method is also implemented as a supplementary process, which impedes the production phase of corrugated board box itself.

In particular, EP-A-0 092 079 discloses a corrugating unit for manufacturing corrugated board comprising :

– corrugated rolls for corrugating a corrugating medium web,

– a glueing unit for applying glue onto this corrugated board web,

– guide rolls for guiding a linerboard wed into contact with the corrugated board web so as to have glue applied on it, and

– at least one preheating roll intended to preheat the linerboard web.

The aim of this invention is to overcome the disadvantages associated with the technology described above and to achieve a totally new kind of a coating method for corrugated board.

The invention is based on guiding a single-side-laminating film web onto a preheating roll together with the linerboard web so that the laminating side of the film web faces the linerboard web.

More specifically, the method in accordance with the invention is characterized by what is stated in the characterizing part of claim 1.

Furthermore, the apparatus in accordance with the invention is characterized by what is stated in the characterizing part of claim 4.

The invention provides outstanding benefits.

The method in accordance with the invention provides the advantage of not slowing the manufacturing process of the final product, i.e., the corrugated board box and it does not require the supplementary procedures mandatory in the prior art production process, thus being able to offer a much improved final product as regards to the costs and quality.

The invention is next examined in detail with help of the exemplifying embodiments illustrated in the attached drawings.

Figure 1 illustrates schematically an apparatus for the implementation of the coating method in accordance with the invention.

Figure 2 shows a coating apparatus in accordance with the invention in a cross-sectioned side view.

Figure 3 shows another coating apparatus in accordance with the invention in a cross-sectioned side view.

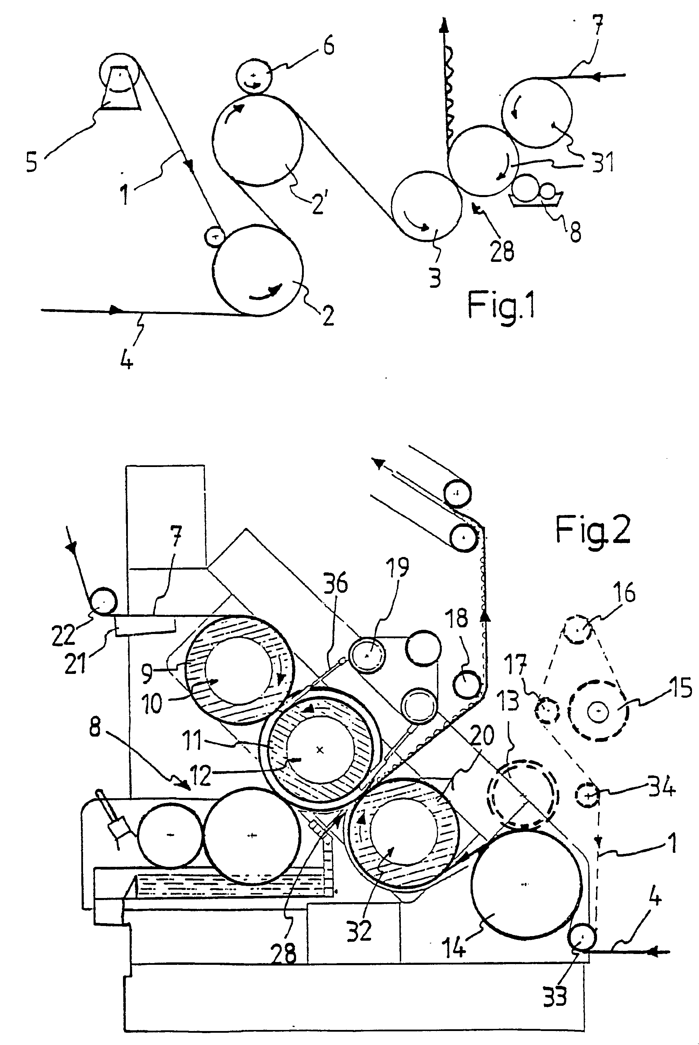

In accordance with Figure 1, a plastic film web 1 having a heat-laminating surface on one side and possessing a heat durability sufficient for the manufacturing process of corrugated board is routed over a first small preheating roll 2 and a second small preheating roll 2' of the corrugated board manufacturing machine. The material of the plastic film web is polyester film whose one side has a high heat durability (about 240°C). This kind of material is available under such trade names as, e.g., Melinex 850. The surface temperature of the heating rolls 2 and 2' is typically 130°C. The plastic film web 1 passes over the first small-diameter preheating roll 2 initially alone until a linerboard web 4 of corrugated board is guided over the plastic film web 1. Thanks to the heating, the plastic film web 1 is laminated to the linerboard web 4. After the first preheating roll 2, the web combination 1 and 4 is guided to the second preheating roll 2' so that the plastic film web 1 is now outermost. A pressure roll 6 with a heat-resistant rubber coating of 5...8 mm thickness is advantageously used in conjunction with the second small-diameter preheating roll 2'. The diameter of the pressure roll is typically 200...250 mm and the bulging at the middle of the roll is about 1...1.5 mm. The pressing force per unit of length is about $10^4...2.10^4$ N/m (10...20 kg/cm) and the total pressing force of the nip is typically (2.5.10⁴...5.10⁴ N 2500...5000 kg). The pressing force can be adjusted by hydraulic means. A corrugating medium web 7 is corrugated by corrugating rolls 31 and glue is applied to the corrugating medium web 7 by a glueing unit 8. The corrugating medium web 7 is glued to the nonlaminated surface of the laminated linerboard web 4 in a nip 28 formed between a pressure roll 3 and one of the corrugating rolls 31. The plastic film web 1 can be applied over the entire width of the corrugated board web or only over a part of its width or over several places across the width, thus allowing the same corrugated board web to be used for the manufacture of both a noncoated box and a coated box. The auxiliary equipment required to complement the corrugated board machine comprises simply a laminating film roll stand 5 and possibly also the extra pressure roll 6 of the second preheating roll 2'. The laminating film roll stand 5 must be provided with a brake system for the tension control of the film web 1. To ensure the straightness of the plastic film web 1, the apparatus must be provided with web spreading equipment (not shown). Because the method uses a film with only one side laminating, the film web 1 does not adhere to the preheating rolls 2, 2′ and the pressure rolls 3, 6 of corrugated board. The manufacturing process of corrugated board is not slowed because the temperatures and heat conducting surfaces of the heating rolls of a normal manufacturing process of corrugated board are sufficiently effective to achieve lamination even at the maximum web speed of corrugated board.

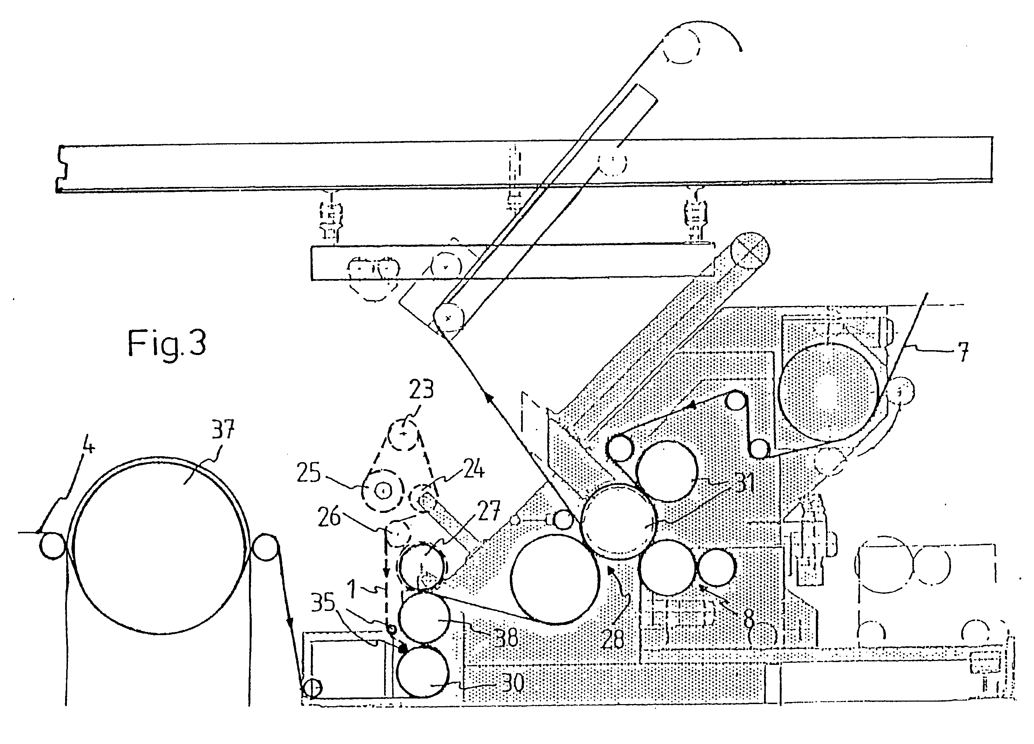

In Figures 2 and 3, the auxiliary equipment required for lamination are presented in dashed lines. In accordance with Figure 2, the corrugating medium web 7 is routed over a guide roll 22 to a steam jet 21 and then to an upper corrugating roll 9 that incorporates a steam box 10. The corrugating medium web 7 is corrugated in a nip formed between the upper corrugating roll 9 and a lower corrugating roll 11. The lower corrugating roll 11 also incorporates a steam box 12. The corrugating medium web 7 is sucked to the surface of the lower corrugating roll 11 by means of a suction arm 36 and a suction tube 19. The glueing unit 8 is used to apply glue to the corrugated board web. The film web 1 to be used in lamination is unwound from a unwinder unit 15 onto a spiral-type spreading roll 16 and further routed to a banana-type spreading roll 17 and guided over a guide roll 34 to another guide roll 33, on which the film web 1 meets the linerboard web 4. The laminating side of the film web 1 faces the linerboard web 4. Next after the second guide roll 33, the linerboard web 4 together with laminating film web 1 is guided to a preheating roll 14, and a first preheating roll 13 is used for pressing the webs against each other in a nip formed between the first pressure roll 13 and the preheating roll 14. The corrugated corrugating medium web 7 is glued to the unlaminated side of the laminated linerboard web 4 in a nip 28, which is formed between a second pressure roll 20 with a steam box 32 and the lower corrugating roll 11. The ready corrugated board is guided over a guide roll 18 to subsequent processing stages.

According to Figure 3, the corrugated board web 7 is corrugated by corrugating rolls 31, and glue is applied on the corrugated web by a glueing unit 8. The laminating side of a linerboard web 4 is preheated by a preheating roll 37 and guided to a first preheating roll 30 and a second preheating roll 38, and next after these, over a pressure roll 27 to a lamination nip 28, in which the corrugated and glue-coated corrugated board web 7 is adhered to the linerboard web 4. A film web 1 is laminated to the linerboard web 4 in conjunction with the preheating rolls 30 and 38. The film web 1 is unwound from a unwinder unit 25 with a brake control over a spiral-type spreading roll 23 and a banana-type spreading roll 24 to guide rolls 26 and 35, from where the film web is routed to a first preheating roll 30 and then to a second preheating roll 38. To achieve lamination, the second preheating roll 38 and a pressure roll 27 are configured to form a pressure nip, in which the film web 1 is finally laminated to the linerboard web 4.

## Claims

1. A method for manufacturing corrugated board, in which method :
   - a corrugating medium web (7) is corrugated in a nip formed between corrugated rolls (9, 11, 31),
   - glue is applied to the corrugated board web (7), and
   - a linerboard web (4) is adhered to the corrugated board web (7) in a joining nip (28),
   - the linerboard web (4) is preheated at least by one preheating roll (2, 14, 30), characterized in that :
   - a plastic film web (1) having a heat-laminating surface on one side and possessing a high heat durability sufficient for the manufacturing process of corrugated board, said film web being fed from a roll unwinder unit (5, 15, 25), which is provided with a breaking means, and
   - the film web (1) is routed over at least one spreading roll (16, 17, 23, 24) to the periphery of said preheating roll (2, 14, 30) and into contact with the linerboard web (4), and together with said linerboard web (4) over said preheating roll (2, 14, 30), such that the laminating side of the film web (1) faces the side of the linerboard web (4) which is not glued to the corrugating board web (7).

2. A method in accordance with claim 1, characterized in that the film web (1) is pressed by a pressure roll (6, 13, 27) against a preheating roll (2′, 14, 38).

3. A method in accordance with claim 1 or 2, characterized in that the surface to be laminated of the linerboard web (4) is preheated before it comes into contact with said film web (1).

4. An apparatus for manufacturing corrugated board comprising :
   - corrugating rolls (31, 9, 11) for corrugating a corrugating medium web (7),
   - a glueing unit (8) for applying glue onto the corrugated board web (7), and
   - guide rolls (20, 3) for guiding a linerboard web (4) to make contact with the corrugated board web (7) having glue applied on it,
   - at least one preheating roll (2, 14, 30), with which the linerboard web (4) is preheated, characterized by :
   - a roll unwinder unit (5, 15, 25) with brake control, with which a plastic film web (1) is unwound, said plastic film web having a heat-laminating surface on one side and possessing a high heat durability sufficient for the manufacturing process of corrugated board,
   - at least one spreading roll (16, 17, 23, 24), with which the film web unwound from the roll unwinder unit is spread, and

– at least one guide roll (33, 35) for guiding the film web (1) toward the periphery of the said preheating roll (2, 14, 30), such that it is guided around said preheating roll together with said linerboard web (4), with its laminating side facing said linerboard web.

5. Apparatus in accordance with claim 4, characterized in that the spreading rolls (16, 17, 23, 24) are of spiral or banana type.

## Ansprüche

1. Verfahren zum Herstellen einer gewellten Pappe, wobei bei diesem Verfahren :

eine Gewelltes-Medium-Lage (7) in einer Berührungsstelle gewellt wird, die zwischen Wellrollen (9, 11, 31) ausgebildet ist,

ein Klebstoff auf die gewellte Pappenlage (7) aufgebracht wird und

eine Deckpappenlage (4) an die gewellte Pappenlage (7) in einer Verbindungsberührungsstelle (28) geklebt wird,

die Deckpappenlage (4) von zumindest einer Vorwärmerrolle (2, 14, 30) vorgewärmt wird, dadurch gekennzeichnet, daß :

eine Kunststoff-Folienlage (1) eine Wärmelaminieroberfläche auf einer Seite aufweist und eine große Hitzebeständigkeit besitzt, die für das Herstellungsverfahren der gewellten Pappe ausreicht, wobei die Folienlage aus einer Rollenabwicklereinheit (5, 15, 25) zugeführt wird, die mit einem Abreißmittel versehen ist und

die Folienlage (1) über zumindest eine Ausstreckrolle (16, 17, 23, 24) zu der Peripherie der Vorwärmerrolle (2, 14, 30) und in Berührung mit der Deckpappenlage (4), und zusammen mit der Deckpappenlage (4) über der Vorwärmerrolle (2, 14, 30) so geführt wird, daß die Laminierseite der Folienlage (1) der Seite der Deckpappenlage (4) gegenüberliegt, die an die gewellte Pappenlage (7) nicht geklebt wird.

2. Verfahren nach Anspruch 1, dadurch gekennzeichnet, daß die Folienlage (1) von einer Druckrolle (6, 13, 27) gegen eine Vorwärmerrolle (2', 14, 38) gedrückt wird.

3. Verfahren nach Anspruch 1 oder 2, dadurch gekennzeichnet, daß die zu laminierende Oberfläche der Deckpappenlage (4) vorgewärmt wird, bevor sie mit der Folienlage (1) in Berührung kommt.

4. Einrichtung zum Herstellen einer gewellten Pappe, mit :

wellenden Rollen (31, 9, 11) zum Wellen einer Gewelltes-Medium-Lage (7), einer Klebeeinheit (8) zum Aufbringen eines Klebstoffs auf die gewellte Pappenlage (7) und

mit Führungsrollen (20, 3) zum Führen einer Deckpappenlage (4), um einen Kontakt mit der gewellten Pappenlage (7) mit auf ihr aufgebrachtem Klebstoff herzustellen,

mit zumindest einer Vorwärmrolle (2, 14, 30), mit welcher die Deckpappenlage (4) vorgewärmt ist, gekennzeichnet durch ;

eine Rollenabwicklereinheit (5, 15, 25) mit einer Bremsensteuerung, mit welcher eine Kunststoff-Folienlage (1) abgewickelt wird, wobei die Kunststoff-Folienlage eine Wärmelaminieroberfläche auf einer Seite aufweist und eine große Hitzebeständigkeit besitzt, die für das Herstellungsverfahren der gewellten Pappe ausreicht,

mit zumindest einer Ausstreckrolle (16, 17, 23, 24), mit welcher die nicht abgewickelte Folienlage von der Rollenabwicklereinheit ausgestreckt wird und

mit zumindest einer Führungsrolle (31, 35) zum Führen der Folienlage (1) in Richtung zu der Peripherie der Vorwärmerrolle (2, 14, 30) so hin, daß diese um die Vorwärmerrolle zusammen mit der Deckpappenlage (4) geführt ist, wobei ihre Laminierseite der Deckpappenlage gegenüberliegt.

5. Einrichtung nach Anspruch 4, dadurch gekennzeichnet, daß die Ausstreckrollen (16, 17, 23, 24) einer spiralen- oder einer Bananenart sind.

## Revendications

1. Procédé de fabrication de carton ondulé, dans lequel :

une bande de matière ondulable (7) est ondulée dans un pincement défini entre des rouleaux d'ondulation (9, 11, 31),

de la colle est appliquée à la bande ondulée (7), et

une bande de parement (4) est collée à la bande ondulée (7) dans un pincement de jonction (28), la bande de parement (4) est préchauffée au moins par un rouleau de préchauffage (2, 14, 30), caractérisé en ce que :

une bande de film de matière plastique (1), présentant une surface de contre-collage à chaud d'un côté et possédant une durabilité élevée à chaud, suffisante pour le traitement de fabrication du carton ondulé, est distribuée à partir d'une unité de déroulement de bobine (5, 15, 25) qui est pourvue de moyens de freinage, et

la bande de film (1) est guidée sur au moins un rouleau d'étalement (16, 17, 23, 24), à la périphérie du dit rouleau de préchauffage (2, 14, 30) et en contact avec la bande de parement (4), et autour dudit rouleau de préchauffage (2, 14, 3) en combinaison avec ladite bande de parement (4), de sorte que le côté de contre-collage de la bande de film (1) se trouve en face du côté de la bande de parement (4) qui n'est pas collé à la bande ondulée (7).

2. Procédé suivant la revendication 1, caractérisé en ce que la bande de film est pressée par un rouleau de pression (6, 13, 27) contre un rouleau de préchauffage (2′,14, 38).

3. Procédé suivant la revendication 1 ou 2, caractérisé en ce que la surface à contre-coller à la bande de parement (4) est préchauffée avant qu'elle vienne en contact avec ladite bande de film (1).

4. Appareil pour la fabrication de carton ondulé, comprenant :

des rouleaux d'ondulation (31, 9, 11) pour onduler une bande de matière ondulable (7),

un dispositif d'encollage (8) pour appliquer de la colle sur la bande ondulée (7), et

des rouleaux de guidage (20, 3) pour guider une bande de parement (4) et l'amener en contact avec la bande ondulée (7) sur laquelle la colle a été appliquée,

au moins un rouleau de préchauffage (2, 14, 30) au moyen duquel la bande de parement (4) est préchauffée, caractérisé en ce qu'il comprend :

une unité de déroulement de bobine (5, 15, 25) pourvue de moyens de freinage, par laquelle une bande de film de matière plastique (1) est déroulée, ladite bande de film de matière plastique présentant une surface de contre-collage à chaud d'un côté et possédant une durabilité élevée à chaud suffisante pour le traitement de fabrication du carton ondulé,

au moins un rouleau d'étalement (16, 17, 23, 24) au moyen duquel la bande de film extraite de l'unité de déroulement de bobine est étalée, et

au moins un rouleau de guidage (33, 35) pour guider la bande de film (1) vers la périphérie dudit rouleau de préchauffage (2, 14, 30), de sorte que la bande de film est guidée autour dudit rouleau de préchauffage en combinaison avec ladite bande de parement (4), son côté de contre-collage étant en face de ladite bande de parement.

5. Appareil suivant la revendication 4, caractérisé en ce que les rouleaux d'étalement (16,17,23, 24) sont du type en spirale ou en forme de banane.

Fig.1

Fig.2

Fig.3

EP 0 279 850 B1